# EUROPÄISCHE PATENTSCHRIFT

(11) **EP 0 641 802 B1**
(45) Veröffentlichungstag und Bekanntmachung des Hinweises auf die Patenterteilung: **13.01.1999**
(21) Anmeldenummer: 94111025.6
(22) Anmeldetag: 15.07.1994
(51) Int. Cl.: C08B 1/00, C08B 3/06, C08B 1/02

(54) **Verfahren zur Behandlung von Cellulose**
Process for treating cellulose
Procédé de traitement de la cellulose

(30) Priorität: 04.09.1993 DE 4329937
(43) Veröffentlichungstag der Anmeldung: 08.03.1995
(73) Patentinhaber: Rhodia Acetow Aktiengesellschaft, 79108 Freiburg (DE)
(72) Erfinder: Bredereck, Karl, Prof. Dr., D-70193 Stuttgart (DE); Karstens, Ties, Dr., D-79268 Bötzingen (DE); Lentz, Harro, Prof. Dr., D-57078 Siegen (DE); Steinmeier, Hans, Dr., D-79331 Teningen (DE)
(74) Vertreter: Hagemann, Heinrich, Dr.rer.nat., Dipl.-Chem.

(56) Entgegenhaltungen:
- EP-A- 0 077 287
- DE-A- 2 654 180
- US-A- 2 290 888
- DATABASE WPI Week 9011 Derwent Publications Ltd., London, GB; AN 82286 & SU-A-1 484 846 (IVAN CHEM TECHN INS)
- JOURNAL OF APPLIED POLYMER SCIENCE, Bd. 31, 1986 Seiten 2769-2777, N.R. BERTONIERE ET AL. 'Effect of Mode of Agent Removal on Pore Structure of Liquid Ammonia Treated Cotton Cellulose.'
- Faserforschung und Textiltechnik, Band 25 (1974) Heft 2, Seiten 57-60

## Beschreibung

Die Erfindung betrifft ein Verfahren zur Behandlung von Cellulose zu deren Aktivierung für nachfolgende chemische Reaktionen durch Inkontaktbringen der Cellulose mit flüssigem Ammoniak bei gegenüber Atmosphärendruck erhöhtem Druck in einem Druckgefäß und anschließende Entspannung durch rasche Reduzierung des Drucks auf Atmosphärendruck.

Cellulose, insbesondere Zellstoff, die/der acetyliert werden soll, muß vor der Acetylierung aktiviert werden. Üblicherweise erfolgt die Aktivierung dadurch, daß der Zellstoff mit Essigsäure behandelt wird (vergleiche dazu Ullmann's Encyclopedia of Industrial Chemistry, Fifth, Completely Revised Edition, Volume A 5, Seite 440 - VCH Verlagsgesellschaft mbH, D-6940 Weinheim, Federal Republic of Germany 1986). Je nach Verfahrensbedingungen kann es bei diesem bekannten Aktivierungsverfahren vorkommen, daß keine homogene Aktivierung des Zellstoffs erfolgt, da die kristallinen Bereiche dieses Zellstoffs für die eingesetzte reine Essigsäure (Eisessig) schlecht zugänglich sind. Dieses führt dann dazu, daß bei der nachfolgenden Acetylierung die angestrebte Cellulosetriacetat-Stufe in den amorphen Bereichen des Zellstoffs früher erreicht wird als in den kristallinen Bereichen.

Aus der Zeitschrift "Acta Polymerica" 32 (1981), Heft 3, Seiten 164 bis 171, ist es bekannt, flüssiges Ammoniak für die Aktivierung von Cellulose einzusetzen, und zwar bei Normaldruck und bei einer Temperatur von - 50 bis - 60 °C. Die Anwendung von flüssigem Ammoniak zur Aktivierung von Cellulose bietet gegenüber Eisessig den Vorteil, daß auch die kristallinen Bereiche der Cellulose - durch die Aufweitung des Kristallgitters - besser zugänglich werden. Die technische Anwendung dieses Verfahrens ist, bedingt durch die tiefe Temperatur, jedoch ziemlich aufwendig, was eine mögliche Erklärung dafür ist, daß dieses Verfahren nicht produktionsmäßig angewandt wird.

Ferner ist aus der europäischen Patentanmeldung 0 077 287 die Anwendung von flüssigem Ammoniak für die Aktivierung von in Futtermitteln enthaltener Cellulose unter Anwendung von erhöhtem Druck bekannt. Nach dem Verfahren gemäß der europäischen Patentanmeldung 0 077 287 wird das Cellulose enthaltende Material bei hohem Druck mit flüssigem Ammoniak behandelt, wonach eine rasche Reduzierung des Drucks auf Atmosphärendruck erfolgt, wodurch das Ammoniak siedet und die Cellulose aufgefasert wird. Das Verfahren gemäß der europäischem Patentanmeldung 0 077 287 ist zur Aktivierung von Zellstoff, der anschließend acetyliert werden soll, insofern nicht geeignet, als das nach der Entspannung im Zellstoff noch verbleibende Ammoniak mit dem Acetylierungsmittel Essigsäure und dem Acetylierungs-Katalysator Schwefelsäure unter Salzbildung reagiert; dadurch verbleibt das Ammoniak - in gebundener Form - im Acetylierungs- und in nachfolgenden Verseifungsprozeß und gelangt schließlich so, nach der Fällung des Celluloseacetats, in das Abwasser, was in hohem Maße unerwünscht ist.

Nun ist es zwar bekannt, bei der Aktivierung von Cellulose mit flüssigem Ammoniak des Ammoniak am Ende des Prozesses mit Wasser auszuwaschen {vergleiche dazu die Zeitschrift "Faserforschung und Textiltechnik" 25 (1974), Heft 2, Seiten 57 bis 60 - Zeitschrift für Polymerforschung}, jedoch erfolgt gemäß der zuvor erwähnten Literaturstelle die Aktivierung mit dem flüssigen Ammoniak bei tiefen Temperaturen bzw. unter Kühlung, was - wie zuvor bereits in Zusammenhang mit dem in der Zeitschrift "Acta Polymerica" 32 (1981), Heft 3, Seiten 164 bis 171, beschriebenen Aktivierungsverfahren erwähnt wurde - die technische Anwendung eines solchen Aktivierungsverfahrens ziemlich aufwendig macht.

Die US-A-229 088 offenbart die Herstellung von Cellulose in reaktiver Form, insbesondere durch Behandlen von Cellulosematerialien mit Ammoniak oder mit Ammoniak in Kombinationen nur verschiedenen anderen Substanzen.

Der Erfindung liegt daher die Aufgabe zugrunde, ein Verfahren zur Behandlung von Cellulose, insbesondere von Zellstoff, zu deren Aktivierung für nachfolgende chemische Reaktionen, insbesondere für die nachfolgende Acetylierung, mit Hilfe von flüssigem Ammoniak zur Verfügung zu stellen, das die Vorteile der Aktivierung von Cellulose mit flüssigem Ammoniak aufweist, bei dem jedoch keine tiefen Temperaturen angewandt werden müssen, und wobei nach Abschluß der Aktivierung kein oder möglichst wenig Ammoniak in der Cellulose verbleibt. Mit der Erfindung soll auch eine hochgradige und gleichzeitig homogene Aktivierung, besonders in Hinblick auf nachfolgende Acylierungsreaktionen, erreicht werden.

Diese Aufgabe wird erfindungsgemäß gelost durch ein Verfahren zur Behandlung von Cellulose zu deren Aktivierung für nachfolgende chemische Reaktionen durch Inkontaktbringen der Cellulose mit flüssigem Ammoniak bei gegenüber Atmosphärendruck erhöhtem Druck in einem Druckgefäß und anschließende Entspannung durch rasche Reduzierung des Drucks auf Atmosphärendruck, wobei
- als Cellulose Zellstoff mit einem Gehalt an α-Cellulose von mindestens 92 Masse-% eingesetzt wird,
- man das Ammoniak bei Raumtemperatur oder bei einer höheren Temperatur als Raumtemperatur auf den Zellstoff einwirken läßt,
- man nach der Entspannung das im Druckgefäß dann noch verbliebene Ammoniak bis auf einen Minimalgehalt von 2 bis 4 Masse-% bezogen auf die Masse au Zellstoff, bei dem der durch die Einwirkung des Ammoniaks erreichte Aktivierungszustand noch erhalten bleibt, entfernt
   und
- man schließlich das für die Aufrechterhaltung des Aktivierungszustands noch notwendige restliche Ammoniak durch ein anderes Quell- oder Inklusionsmittel ersetzt.

Bevorzugt wählt man als Mengenverhältnis von Ammoniak zu Zellstoff 6 Masse-Einheiten Ammoniak zu 10 Masse-Einheiten Zellstoff bis 10 Masse-Einheiten Ammoniak zu 10 Masse-Einheiten Zellstoff.

Ferner ist es bevorzugt, daß man die Entfernung des nach der Entspannung im Druckgefäß verbliebenen Ammoniaks - bis auf dessen Minimalgehalt für die Aufrechterhaltung des Aktivierungszustands - durch Absaugen, Abpumpen, Abblasen oder durch Erwärmen des Inhalts des Druckgefäßes auf eine Temperatur, die mindestens der Raumtemperatur entspricht, bewerkstelligt.

Außerdem ist es bevorzugt, daß man als anderes Quell- oder Inklusionsmittel Wasser, Wasserdampf, überhitzten Wasserdampf, einen Ether, ein Epoxid, ein Glykol, einen Kohlenwasserstoff, ein Edelgas oder Kohlendioxid einsetzt.

Schließlich ist es noch bevorzugt, daß das bei der Entspannung entweichende gasförmige Ammoniak aufgefangen und wieder zu flüssigem Ammoniak verdichtet wird.

Für das erfindungsgemäß Verfahren wird ein Druckgefäß, also ein druckfestes Gefäß eingesetzt. An die Art dieses Druckgefäßes sind keine besonderen Anforderungen zu stellen. Der Begriff "Druckgefäß" soll im Sinne der Erfindung weitestgehend verstanden werden. Das Druckgefäß kann beispielsweise ein Autoklav oder für kontinuierliche Durchführung des Verfahrens ein Extruder sein. Die in der - nicht vorveröffentlichten - deutschen Patentanmeldung P 42 16 295.5 beschriebene Vorrichtung für quasi-kontinuierliche technisch-chemische Prozesse in komprimierten Fluiden läßt sich ebenfalls als Druckgefäß für das erfindungsgemäße Verfahren einsetzen.

Gemäß der Erfindung erfolgt die Entspannung des Ammoniaks durch rasche Reduzierung des Drucks auf Atmosphärendruck Damit ist gemeint, daß die Reduzierung des Drucks auf Atmosphärendruck möglichst schlagartig erfolgen soll, vorzugsweise innerhalb eines Zeitraumes von einigen wenigen Sekunden, ganz besonders bevorzugt innerhalb eines Zeitraumes von weniger als 1 Sekunde.

Zur Durchführung des erfindungsgemäßen Verfahrens wird der Zellstoff in ein Druckgefäß, wie einen Autoklaven, eingebracht und mit unter Überdruck stehendem flüssigem Ammoniak beaufschlagt. Üblicherweise ist die Temperatur im Druckgefäß dabei die Temperatur der Umgebung, also Raumtemperatur; die Anwendung höherer Temperaturen als Raumtemperatur ist jedoch auch möglich, was insofern vorteilhaft ist, als die anschließende Entfernung des Ammoniaks aus dem Druckgefäß bei der Entspannung erleichtert wird.

Mit der Erfindung werden folgende Vorteile erreicht:
- da das erfindungsgemäße Verfahren nicht bei tiefen Temperaturen stattfindet, kann man auf aufwendige (Kühl)apparaturen verzichten.
- mit dem erfindungsgemäßen Verfahren wird eine homogene und gleichzeitig hochgradige Aktivierung erreicht.
- mit der Erfindung ist die Aktivierung von Zellstoff, der anschließend acetyliert werden soll, auch in großtechnischem Maßstab möglich.

Die Erfindung wird nachstehend anhand eines Beispiels noch näher erläutert.

### Beispiel

Für das Verfahren nach der Erfindung wurde ein zylindrischer Autoklav aus V 4 A-Stahl mit einem Fassungsvermögen von 750 ml eingesetzt. In diesen Autoklaven wurden 50 g mechanisch aufgefaserter Zellstoff eingebracht. Der verwendete Zellstoff hatte einen Gehalt an α-Cellulose von 96 Masse-%.
Durch ein Ventil an der Oberseite des Autoklaven wurde 50 g flüssiges Ammoniak in den nunmehr geschlossenen Autoklaven eingeleitet, wonach das Ventil geschlossen wurde. Die Temperatur im Autoklaven betrug 20 °C. Nach Einleitung des Ammoniaks und bei der zuvor erwähnten Temperatur von 20 °C betrug der Druck im Autoklaven 6 bar. Die Dauer der Einwirkung des Ammoniaks auf den Zellstoff betrug 30 Minuten.
Nach Ablauf dieses Zeitraumes von 30 Minuten wurde das zuvor erwähnte Ventil am Autoklaven geöffnet, wodurch das Ammoniak schlagartig entwich und der Inhalt des Autoklaven auf Atmosphärendruck entspannt war.
Zur Einstellung eines Minimalgehalts an Ammoniak im Zellstoff von 4 Masse-% bezogen auf die Masse an Zellstoff wurde der Autoklav - mit geöffnetem Ventil - während eines Zeitraumes von 15 Minuten in einem Wasserbad mit einer Temperatur von 40 °C erwärmt. Der gewünschte Minimalgehalt von 4 Masse-% an Ammoniak wurde gravimetrisch überprüft.
Anschließend wurde durch das erwähnte Ventil am Autoklaven Wasserdampf in den Autoklaven eingeleitet, bis darin ein Druck von 4 bar erreicht war, wonach das Ventil wieder geschlossen wurde. Der Wasserdampf hatte dabei eine Temperatur von 145 °C. Die Dauer der Einwirkung des Wasserdampfs auf den Zellstoff betrug 5 Minuten. Danach wurde wieder auf Atmosphärendruck entspannt, indem man das mehrfach erwähnte Ventil wieder öffnete.
Anschließend wurde der Zellstoff dem Autoklaven entnommen und zur Feststellung der Reaktivität acetyliert. Dabei wurde festgestellt, daß die Acetylierungsdauer dieses Zellstoffs bis zur Cellulosetriacetat-Stufe gegenüber der eines Zellstoffs, der mit Hilfe von Eisessig aktiviert worden war, um 50 % reduziert war: Die Acetylierungsdauer für den gemäß diesem Beispiel aktivierten Zellstoff betrug lediglich 20 Minuten, wogegen die Acetylierungsdauer für einen Zellstoff, der mit Hilfe von Eisessig aktiviert worden war, 40 Minuten betrug.

Ferner wurde festgestellt, daß die Reaktionslösung aus nach diesem Beispiel acetyliertem Zellstoff (= Cellulosetriacetat-Lösung) sehr homogen und frei von Zellstoffasern war.

## Patentansprüche

1. Verfahren zur Behandlung von Cellulose zu deren Aktivierung für nachfolgende chemische Reaktionen durch Inkontaktbringen der Cellulose mit flüssigem Ammoniak bei gegenüber Atmosphärendruck erhöhtem Druck in einem Druckgefäß und anschließende Entspannung durch rasche Reduzierung des Drucks auf Atmosphärendruck, wobei
- als Cellulose Zellstoff mit einem Gehalt an α-Cellulose von mindestens 92 Masse-% eingesetzt wird,
- man das Ammoniak bei Raumtemperatur oder bei einer höheren Temperatur als Raumtemperatur auf den Zellstoff einwirken läßt,
- man nach der Entspannung das im Druckgefäß dann noch verbliebene Ammoniak bis auf einen Minimalgehalt von 2 bis 4 Masse-% bezogen auf die Masse an Zellstoff, bei dem der durch die Einwirkung des Ammoniaks erreichte Aktivierungszustand noch erhalten bleibt, entfernt
und
- man schließlich das für die Aufrechterhaltung des Aktivierungszustands noch notwendige restliche Ammoniak durch ein anderes Quell- oder Inklusionsmittel ersetzt.

2. Verfahren nach Anspruch 1, dadurch gekennzeichnet, daß man als Mengenverhältnis von Ammoniak zu Zellstoff 6 Masse-Einheiten Ammoniak zu 10 Masse-Einheiten Zellstoff bis 10 Masse-Einheiten Ammoniak zu 10 Masse-Einheiten Zellstoff wählt.

3. Verfahren nach Anspruch 1 oder 2, dadurch gekennzeichnet, daß man die Entfernung des nach der Entspannung im Druckgefäß verbliebenen Ammoniaks - bis auf dessen Minimalgehalt für die Aufrechterhaltung des Aktivierungszustands - durch Absaugen, Abpumpen, Abblasen oder durch Erwärmen des Inhalts des Druckgefäßes auf eine Temperatur, die mindestens der Raumtemperatur entspricht, bewerkstelligt.

4. Verfahren nach mindestens einem der Ansprüche 1 bis 3, dadurch gekennzeichnet, daß man als anderes Quell- oder Inklusionsmittel Wasser, Wasserdampf, überhitzten Wasserdampf, einen Ether, ein Epoxid, ein Glykol, einen Kohlenwasserstoff, ein Edelgas oder Kohlendioxid einsetzt.

5. Verfahren nach mindestens einem der Ansprüche 1 bis 4, dadurch gekennzeichnet, daß das bei der Entspannung entweichende gasförmige Ammoniak aufgefangen und wieder zu flüssigem Ammoniak verdichtet wird.

## Claims

1. Method of treating cellulose to activate it for subsequent chemical reactions by bringing the cellulose into contact with liquid ammonia under a pressure which is increased with respect to atmospheric pressure in a pressure vessel and subsequent depressurisation by rapid reduction of the pressure to atmospheric pressure, wherein
- pulp with a content of α-cellulose of at least 92% by mass is used,
- the ammonia is allowed to act on the pulp at room temperature or at a temperature higher than room temperature,
- after the depressurisation the ammonia still remaining in the pressure vessel is removed down to a minimum content of 2 to 4% by weight, with respect to the mass of pulp, at which the activated state achieved by the action of the ammonia is still retained
and
- the remaining ammonia still necessary for the maintenance of the activated state is finally replaced by another swelling or inclusion agent.

2. Method as claimed in Claim 1, characterised in that a quantitative ratio of ammonia to pulp of 6 mass units of ammonia to 10 mass units of pulp to 10 mass units of ammonia to 10 mass units of pulp is selected.

3. Method as claimed in Claim 1 or 2, characterised in that the removal of the ammonia remaining in the pressure vessel after the depressurisation - down to its minimum content for the maintenance of the activated state - is effected by suction, pumping away, discharging under pressure or by warming the content of the pressure vessel to a temperature which corresponds at least to the room temperature.

4. Method as claimed in at least one of Claims 1 to 3, characterised in that water, steam, superheated steam, an ether, an epoxide, a glycol, a hydrocarbon, an inert gas or carbon dioxide is used as the other swelling or inclusion agent.

5. Method as claimed in at least one of Claims 1 to 4, characterised in that the gaseous ammonia escaping during the depressurisation is collected and recompressed to form liquid ammonia.

## Revendications

1. Procédé de traitement de la cellulose en vue de son activation pour des réactions chimiques ultérieures par mise en contact de la cellulose avec de l'ammoniac liquide à une pression élevée par rapport à la pression atmosphérique dans un récipient sous pression, suivie d'une détente par un retour rapide de la pression à la pression atmosphérique, dans lequel :
- on utilise comme cellulose une pâte de cellulose avec une teneur en α-cellulose d'au moins 92 % en masse ;
- on laisse agir l'ammoniac sur la pâte de cellulose à la température ambiante ou à une température supérieure à la température ambiante ;
- après la détente, on élimine l'ammoniac restant dans le récipient sous pression jusqu'à une teneur minimale de 2 à 4 % en masse, ramenée à la masse de la pâte de cellulose, à laquelle l'état d'activation obtenu par l'action de l'ammoniac est encore maintenu ;
et
- enfin, on remplace l'ammoniac résiduel encore nécessaire pour maintenir l'état d'activation par un autre agent d'expansion ou agent d'inclusion.

2. Procédé selon la revendication 1, caractérisé en ce que le rapport de la quantité d'ammoniac sur la quantité de pâte de cellulose est choisi dans la plage de 6 unités de masse d'ammoniac pour 10 unités de masse de pâte de cellulose à 10 unités de masse d'ammoniac pour 10 unités de masse de pâte de cellulose.

3. Procédé selon la revendication 1 ou 2, caractérisé en ce que l'élimination de l'ammoniac restant dans le récipient sous pression après la détente - jusqu'à la teneur minimale en ammoniac permettant de maintenir l'état d'activation - se fait par aspiration, pompage, soufflage ou chauffage du contenu du récipient sous pression à une température correspondant au moins à la température ambiante.

4. Procédé selon l'une au moins des revendications 1 à 3, caractérisé en ce que l'on utilise comme autre agent d'expansion ou agent d'inclusion de l'eau, de la vapeur d'eau, de la vapeur d'eau surchauffée, un éther, un époxyde, un glycol, un hydrocarbure, un gaz rare ou du dioxyde de carbone.

5. Procédé selon l'une au moins des revendications 1 à 4, caractérisé en ce que l'ammoniac gazeux qui se dégage lors de la détente est récupéré et à nouveau comprimé sous forme d'ammoniac liquide.
